Europäisches Patentamt

European Patent Office

Office européen des brevets

(19)

(11) **EP 1 038 905 A2**

(12) **EUROPÄISCHE PATENTANMELDUNG**

(43) Veröffentlichungstag:
27.09.2000 Patentblatt 2000/39

(51) Int. Cl.[7]: **C08J 5/18**
// C08L67:02

(21) Anmeldenummer: **00103490.9**

(22) Anmeldetag: **01.03.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **26.03.1999 DE 19913982**
          **23.09.1999 DE 19945560**

(71) Anmelder:
**Mitsubishi Polyester Film GmbH**
**65203 Wiesbaden (DE)**

(72) Erfinder:
• **Murschall, Ursula**
  **55283 Nierstein (DE)**

• **Crass, Günther**
  **65232 Tanusstein (DE)**
• **Bewer, Günter**
  **65207 Wiesbaden (DE)**
• **Oberländer, Klaus**
  **65207 Wiesbaden (DE)**

(74) Vertreter:
**Schweitzer, Klaus, Dr. et al**
**Patentanwaltskanzlei Zounek,**
**Industriepark Kalle-Albert,**
**Rheingaustrasse 190-196**
**65203 Wiesbaden (DE)**

(54) **Transparente, UV-stabilisierte Folie aus einem kristallisierbaren Thermoplast**

(57)    Die Erfindung betrifft eine transparente Folie, mit einer Dicke im Bereich von 1 bis 500 μm, die als Hauptbestandteil einen kristallisierbaren Thermoplasten enthält, die dadurch gekennzeichnet ist, daß sie mindestens einen UV-Stabilisator als Lichtschutzmittel enthält, ein Verfahren zu ihrer Herstellung sowie ihre Verwendung.

**EP 1 038 905 A2**

**Beschreibung**

Die Erfindung betrifft eine, transparente, UV-stabilisierte Folie aus einem kristallisierbaren Thermoplast, deren Dicke im Bereich von 1 bis 500 μm liegt. Die Folie enthält mindestens einen UV-Stabilisator als Lichtschutzmittel und zeichnet sich durch eine gute Verstreckbarkeit, durch sehr gute optische und mechanische Eigenschaften aus. Die Erfindung betrifft ferner ein Verfahren zur Herstellung dieser Folie und ihre Verwendung.

Transparente Folien aus kristallisierbaren Thermoplasten mit einer Dicke zwischen 1 und 500 μm sind hinreichend bekannt.

Diese Folien enthalten keinerlei UV-Stabilisatoren als Lichtschutzmittel, so daß sich weder die Folien noch die daraus hergestellten Artikel für Außenanwendungen eignen. Bei Außenanwendungen zeigen diese Folien bereits nach kurzer Zeit eine Vergilbung und eine Verschlechterung der mechanischen Eigenschaften infolge eines photooxidativen Abbaus durch Sonnenlicht.

In der **EP-A-0 620 245** sind Folien beschrieben, die hinsichtlich ihrer thermischen Stabilität verbessert sind. Diese Folien enthalten Antioxidationsmittel, welche geeignet sind, in der Folie gebildete Radikale abzufangen und gebildetes Peroxid abzubauen. Ein Vorschlag, wie die UV-Stabilität solcher Folien zu verbessern sei, ist dieser Schrift jedoch nicht zu entnehmen.

In der **WO 98/06575** wird eine matte, siegelbare Folie beschrieben, die mindestens einen UV-Absorber enthält. Der UV-Absorber hat hier die Aufgabe, die mechanischen Eigenschaften der Folie nach der Bewitterung nicht dramatisch zu verschlechtern. Die Folie hat einen Glanz von weniger als 60 % und eine Trübung, die zwischen 30 % und 70 % liegt. Die Siegelfähigkeit wird dadurch erreicht, daß die Folie mit einem Copolyester koextrudiert ist. Die nicht siegelfähige Seite muß rauh sein und damit niedrigglänzend und matt sein, damit die Folie wickelbar und weiterverarbeitbar ist, da sich derartige Copolyester durch ein starkes Verkleben mit der nicht siegelbaren Seite auszeichnen. Durch die hohe Rauhigkeit und Zudosierung von Pigmenten wird die Klebeneigung reduziert. Jedoch eignet sich die Folie nicht für hochtransparente, hochglänzende Anwendungen, wo eine perfekte Optik mit niedrigem Gelbwert und Absorption des kurzwelligen UV-Lichtes gefordert ist. Aufgrund der Rauheit und der Mattigkeit der Folie wird das kurzwellige UV-Licht am Durchlaß durch die Folie gestört. Diese Folie kann nicht hochtransparent und damit glatt sein, da sie sonst nicht wickelbar und nicht weiterverarbeitbar wäre. Außerdem weisen diese Folien einen inakzeptablen Gelbwert (YID) auf.

Ein Vorschlag, wie ein niedriger Gelbwert (< 10) eingestellt werden kann, ist der Schrift nicht zu entnehmen.

Aufgabe der vorliegenden Erfindung war es, eine transparente Folie mit einer Dicke von 1 bis 500 μm bereitzustellen, die neben einer guten Verstreckbarkeit, guten mechanischen sowie optischen Eigenschaften vor allem eine hohe UV-Stabilität aufweist.

Eine hohe UV-Stabilität bedeutet, daß die Folien durch Sonnenlicht oder andere UV-Strahlung nicht oder nur extrem wenig geschädigt werden, so daß sich die Folien für Außenanwendungen und/oder kritische Innenanwendungen eignen. Insbesondere sollen die Folien bei mehrjähriger Außenanwendung nicht vergilben, keine Versprödung oder Rißbildung der Oberfläche zeigen und auch keine Verschlechterung der mechanischen Eigenschaften aufweisen. Hohe UV-Stabilität bedeutet demnach, daß die Folie das UV-Licht absorbiert und Licht erst im sichtbaren Bereich durchläßt.

Zu den guten optischen Eigenschaften zählt beispielsweise eine hohe Lichttransmission ($\geq$ 84 %), ein hoher Oberflächenglanz ( > 120), eine extrem niedrige Trübung (< 20 %) sowie eine niedrige Gelbzahl (YID < 10).

Zu den guten mechanischen Eigenschaften zählt unter anderem ein hoher E-Modul ($E_{MD}$ > 3800 N/mm$^2$; $E_{TD}$ > 5000 N/mm$^2$) sowie gute Reißfestigkeitswerte (in MD > 130 N/mm$^2$; in TD > 180 N/mm$^2$) und gute Reißdehnungswerte in Längs- und Querrichtung (in MD > 120 %; in TD > 70 %).

Zu der guten Verstreckbarkeit zählt, daß sich die Folie bei ihrer Herstellung sowohl in Längs- als auch in Querrichtung hervorragend und ohne Abrisse orientieren läßt.

Darüber hinaus sollte die erfindungsgemäße Folie rezyklierbar sein, insbesondere ohne Verlust der optischen und der mechanischen Eigenschaften, sowie schwer brennbar, damit sie beispielsweise auch für Innenanwendungen und im Messebau eingesetzt werden kann.

Gelöst wird diese Aufgabe durch eine transparente Folie mit einer Dicke im Bereich von 1 bis 500 μm, die als Hauptbestandteil einen kristallisierbaren Thermoplasten enthält, die dadurch gekennzeichnet ist, daß die Folie mindestens einen UV-Stabilisator als Lichtschutzmittel und einen optischen Aufheller enthält, wobei der UV-Stabilisator und/oder der optische Aufheller zweckmäßigerweise als Masterbatch bei der Folienherstellung direkt zudosiert werden.

Die transparente Folie enthält als Hauptbestandteil einen kristallisierbaren Thermoplasten. Geeignete kristallisierbare bzw. teilkristalline Thermoplaste sind beispielsweise Polyethylenterephthalat, Polybutylenterephthalat, Polyethylennaphthalat, wobei Polyethylenterephthalat bevorzugt ist.

Erfindungsgemäß versteht man unter kristallisierbarem Thermoplasten

- kristallisierbare Homopolymere,
- kristallisierbare Copolymere,
- kristallisierbare Compounds,
- kristallisierbares Rezyklat und
- andere Variationen von kristallisierbaren Thermoplasten.

Die transparente Folie kann sowohl einschichtig als auch mehrschichtig sein. Die transparente Folie kann ebenfalls mit diversen Copolyestern oder Haftvermittlern beschichtet sein.

Die transparente Folie enthält mindestens einen UV-Stabilisator als Lichtschutzmittel, der zweckmäßigerweise über die sogenannte Masterbatch-Technologie direkt bei der Folienherstellung zudosiert wird, wobei die Konzentration des UV-Stabilisators vorzugsweise zwischen 0,01 Gew.-% und 5 Gew.-%, bezogen auf das Gewicht der Schicht des kristallisierbaren Thermoplasten, liegt.

Licht, insbesondere der ultraviolette Anteil der Sonnenstrahlung, d. h. der Wellenlängenbereich von 280 bis 400 nm, leitet bei Thermoplasten Abbauvorgänge ein, als deren Folge sich nicht nur das visuelle Erscheinungsbild infolge von Farbänderung bzw. Vergilbung ändert, sondern auch die mechanisch-physikalischen Eigenschaften negativ beeinflußt werden.

Die Inhibierung dieser photooxidativen Abbauvorgänge ist von erheblicher technischer und wirtschaftlicher Bedeutung, da andernfalls die Anwendungsmöglichkeiten von zahlreichen Thermoplasten drastisch eingeschränkt sind.

Polyethylenterephthalate beginnen beispielsweise schon unterhalb von 360 nm UV-Licht zu absorbieren, ihre Absorption nimmt unterhalb von 320 nm beträchtlich zu und ist unterhalb von 300 nm sehr ausgeprägt. Die maximale Absorption liegt zwischen 280 und 300 nm.

In Gegenwart von Sauerstoff werden hauptsächlich Kettenspaltungen, jedoch keine Vernetzungen beobachtet. Kohlenmonoxid, Kohlendioxid und Carbonsäuren stellen die mengenmäßig überwiegenden Photooxidationsprodukte dar. Neben der direkten Photolyse der Estergruppen müssen noch Oxidationsreaktionen in Erwägung gezogen werden, die über Peroxidradikale ebenfalls die Bildung von Kohlendioxid zur Folge haben.

Die Photooxidation von Polyethylenterephthalaten kann auch über Wasserstoffabspaltung in $\alpha$-Stellung der Estergruppen zu Hydroperoxiden und deren Zersetzungsprodukten sowie zu damit verbundenen Kettenspaltungen führen (H. Day, D. M. Wiles: J. Appl. Polym. Sci 16, 1972, Seite 203).

UV-Stabilisatoren, d.h. UV-Absorber als Lichtschutzmittel, sind chemische Verbindungen, die in die physikalischen und chemischen Prozesse des lichtinduzierten Abbaus eingreifen können. Ruß und andere Pigmente können teilweise einen Lichtschutz bewirken. Diese Substanzen sind jedoch für transparente Folien ungeeignet, da sie zur Verfärbung oder Farbänderung führen. Für transparente Folien sind nur organische und metallorganische Verbindungen geeignet, die dem zu stabilisierenden Thermoplasten keine oder nur eine extrem geringe Farbe oder Farbanderung verleihen.

Geeignete UV-Stabilisatoren als Lichtschutzmittel sind UV-Stabilisatoren, die mindestens 70 %, vorzugsweise 80 %, besonders bevorzugt 90 %, des UV-Lichts im Wellenlängenbereich von 180 nm bis 380 nm, vorzugsweise 280 bis 350 nm absorbieren. Diese sind insbesondere geeignet, wenn sie im Temperaturbereich von 260 bis 300 °C thermisch stabil sind, d.h. sich nicht zersetzen und nicht zur Ausgasung führen. Geeignete UV-Stabilisatoren als Lichtschutzmittel sind beispielsweise 2-Hydroxybenzophenone, 2-Hydroxybenzotriazole, nickelorganische Verbindungen, Salicylsäureester, Zimtsäureester-Derivate, Resorcinmonobenzoate, Oxalsäureanilide, Hydroxybenzoesäureester, sterisch gehinderte Amine und Triazine, wobei die 2-Hydroxybenzotriazole und die Triazine bevorzugt sind.

Als weiterer erfindungsgemäßen Bestandteil enthält die Folie mindestens einen optischen Aufheller. Die erfindungsgemäßen optischen Aufheller sind in der Lage, UV-Strahlen im Wellenlängenbereich von ca. 360 bis 380 nm zu absorbieren und als längerwelliges, sichtbares blauviolettes Licht wieder abzugeben. Geeignete optische Aufheller sind Bis-benzoxazole, Phenylcumarine und Bis-sterylbiphenyle, insbesondere Phenylcumarin, besonders bevorzugt Triazin-phenylcumarin (Tinopal®, Ciba-Geigy, Basel, Schweiz).

Sofern zweckmäßig, können neben dem optischen Aufheller auch noch in Polyester lösliche blaue Farbstoffe zugesetzt werden. Als geeignete blaue Farbstoffe haben sich Kobaltblau, Ultramarinblau und Anthrachinonfarbstoffe, insbesondere Sudanblau 2 (BASF, Ludwigshafen, Bundesrepublik Deutschland) erwiesen.

Die optischen Aufheller werden in Mengen von 10 ppm bis 50.000 ppm, insbesondere 20 ppm bis 30.000 ppm, besonders bevorzugt 50 ppm bis 25.000 ppm (bezogen auf das Gewicht der auszurüstenden Schicht) eingesetzt.

Die blauen Farbstoffe werden in Mengen von 10 ppm bis 10.000 ppm, insbesondere 20 ppm bis 5.000 ppm, besonders bevorzugt 50 ppm bis 1.000 ppm (bezogen auf das Gewicht der auszurüstenden Schicht) eingesetzt.

Es war völlig überraschend, daß der Einsatz der obengenannten Kombinationen aus UV-Stabilisatoren, optischem Aufheller und ggf. blauem Farbstoff in Folien zu dem gewünschten Ergebnis führte. Der Fachmann hätte vermutlich zunächst versucht, eine gewisse UV-Stabilität über ein Antioxidanz zu erreichen, hätte jedoch nach Bewitterung festgestellt, daß die Folie schnell gelb wird.

Vor dem Hintergrund, daß UV-Stabilisatoren, die das UV-Licht absorbieren und somit Schutz bieten, hätte der Fachmann wohl handelsübliche UV-Stabilisatoren eingesetzt. Dabei hätte er festgestellt, daß

- der UV-Stabilisator eine mangelnde thermische Stabilität hat und sich bei Temperaturen zwischen 200 °C und 240 °C zersetzt oder ausgast
- er große Mengen (ca. 10 bis 15 Gew.-%) UV-Stabilisator einarbeiten muß, damit das UV-Licht absorbiert wird und damit die Folie nicht geschädigt wird.

Bei diesen hohen Konzentrationen hätte er festgestellt, daß die Folie schon nach der Herstellung gelb ist, bei Gelbzahlunterschieden (YID) um die 25. Des weiteren hätte er festgestellt, daß die mechanischen Eigenschaften negativ beeinflußt werden. Beim Verstrecken hätte er ungewöhnliche Probleme bekommen wie

- Abrisse wegen mangelnder Festigkeit, d.h. E-Modul
- Düsenablagerungen, was zu Profilschwankungen führt
- Walzenablagerungen vom UV-Stabilisator, was zur Beeinträchtigung der optischen Eigenschaften (schlechte Trübung, Klebedefekt, inhomogene Oberfläche) führt
- Ablagerungen in Streck-, Fixierrahmen, die auf die Folie tropfen.

Daher war es mehr als überraschend, daß bereits mit niedrigen Konzentrationen des erfindungsgemäßen UV-Stabilisators in Kombination mit dem optischen Aufheller und ggf. dem blauen Farbstoff ein hervorragender UV-Schutz erzielt wurde. Sehr überraschend war, daß sich bei diesem hervorragenden UV-Schutz

- der Gelbwert der Folie im Vergleich zu einer nicht-stabilisierten Folie im Rahmen der Meßgenauigket nicht ändert;
- keine Ausgasungen, keine Düsenablagerungen, keine Rahmenausdampfungen einstellten, wodurch die Folie eine exzellente Optik aufweist und ein ausgezeichnetes Profil und eine ausgezeichnete Planlage hat.;
- sich die UV-stabilisierte Folie durch eine hervorragende Streckbarkeit auszeichnet, so daß sie verfahrenssicher und stabil auf high speed film lines bis zu Geschwindigkeiten von 420 m/min produktionssicher hergestellt werden kann. Damit ist die Folie auch wirtschaftlich rentabel.

Des weiteren ist sehr überraschend, daß auch das Regenerat wieder einsetzbar ist, ohne den Gelbwert der Folie negativ zu beeinflussen.

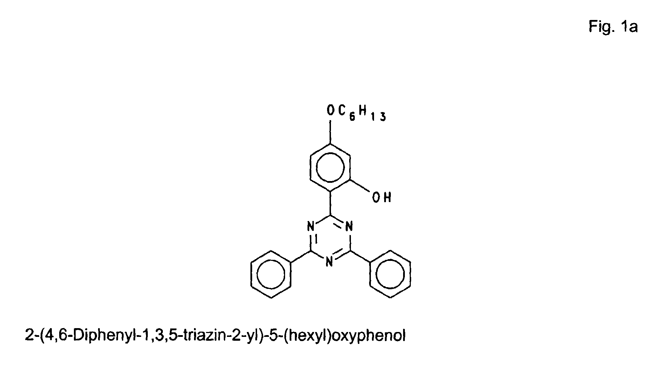

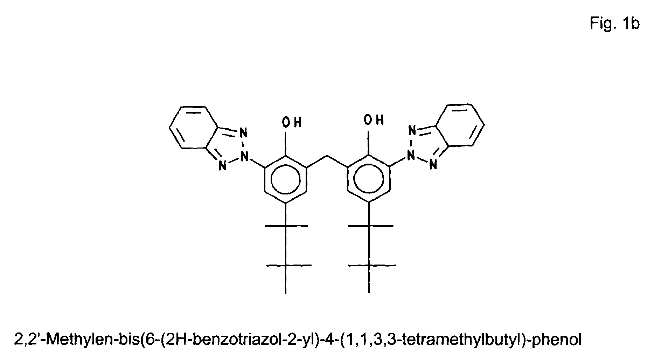

In einer besonders bevorzugten Ausführungsform enthält die erfindungsgemäße, transparente Folie als Hauptbestandteil ein kristallisierbares Polyethylenterephthalat und 0,01 Gew.-% bis 5,0 Gew.-% 2-(4,6-Diphenyl-1,3,5-triazin-2-yl)-5-(hexyl)oxy-phenol (Struktur in Fig. 1a) oder 0,01 Gew.-% bis 5,0 Gew.-% 2,2'-Methylen-bis(6-(2H-benzotriazol-2-yl)-4-(1,1,3,3-tetramethylbutyl)-phenol (Struktur in Fig. 1b). In einer bevorzugten Ausführungsform können auch Mischungen dieser beiden UV-Stabilisatoren oder Mischungen von mindestens einem dieser beiden UV-Stabilisatoren mit anderen UV-Stabilisatoren eingesetzt werden, wobei die Gesamtkonzentration an Lichtschutzmittel vorzugsweise zwischen 0,01 Gew.-% und 5,0 Gew.-%, bezogen auf das Gewicht an kristallisierbarem Polyethylenterephthalat, liegt.

Der Oberflächenglanz, gemessen nach DIN 67530 (Meßwinkel 20 °) ist größer als 120, vorzugsweise größer als 140, die Lichttransmission L*, gemessen nach ASTM D 1003, beträgt mehr als 84 %, vorzugsweise mehr als 86 % und die Trübung der Folie, gemessen nach ASTM D 1003, beträgt weniger als 20 %, vorzugsweise weniger als 15 %, welches für die erzielte UV-Stabilität überraschend gut ist.

Die Standardviskosität SV (DCE) des Polyethylenterephthalats, gemessen in Dichloressigsäure nach DIN 53728, liegt zwischen 600 und 1000, vorzugsweise zwischen 700 und 900.

Die intrinsische Viskosität IV (DCE) berechnet sich aus der Standardviskosität SV (DCE) wie folgt:

$$IV \, (DCE) = 6,67 \cdot 10^{-4} \, SV \, (DCE) + 0,118$$

Die transparente Polyethylenteraphtalat-Folie, die mindestens einen UV-Stabilisator sowie mindestens einen optischen Aufheller enthält, kann sowohl einschichtig als auch mehrschichtig sein.

In der mehrschichtigen Ausführungsform ist die Folie aus mindestens einer Kernschicht und mindestens einer Deckschicht aufgebaut, wobei insbesondere ein dreischichtiger A-B-A oder A-B-C Aufbau bevorzugt ist.

Für diese Ausführungsform ist es wesentlich, daß das Polyethylenterephthalat der Kernschicht eine ähnliche Standardviskosität besitzt wie das Polyethylenterephthalat der Deckschicht (en), die an die Kernschicht angrenzt (angrenzen).

In einer besonderen Ausführungsform können die Deckschichten auch aus einem Polyethylennaphthalat - Homopolymeren oder aus einem Polyethylentheraphtalat-Polyethylennaphthalat Copolymeren oder Compound bestehen.

In dieser Ausführungsform haben die Thermoplaste der Deckschichten ebenfalls ähnliche Standardviskosität wie das Polyethylentherephthalat der Kernschicht.

In der mehrschichtigen Ausführungsform ist der UV-Stabilisator und der optische Aufheller und ggf. der blaue Farbstoff vorzugsweise in der bzw. den Deckschichten enthalten. Jedoch kann nach Bedarf auch die kernschicht mit UV-Stabilisatoren ausgerüstet sein.

Anders als in der einschichtigen Ausführungsform bezieht sich hier die Konzentration des oder der Stabilisatoren auf das Gewicht der Thermoplasten in der mit UV-Stabilisator (en) ausgerüsteten Schicht.

Ganz überraschend haben Bewitterungsversuche nach der Testspezifikation ISO 4892 mit dem Atlas CI65 Weather Ometer gezeigt, daß es im Falle einer dreischichtigen Folie durchaus ausreichend ist, die 0,5 µm bis 2 µm dikken Deckschichten mit UV-Stabilisatoren und optischem Aufheller und ggf. blauem Farbstoff auszurüsten, um eine verbesserte UV-Stabilität zu erreichen.

Dadurch werden die mit der bekannten Koextrusionstechnologie hergestellten UV-stabilisierten, mehrschichtigen Folien im Vergleich zu den komplett UV-stabilisierten Monofolien wirtschaftlich interessant, da deutlich weniger UV-Stabilisator zu einer vergleichbaren UV-Stabilität benötigt werden.

Die Folie kann auch mindestens einseitig mit einer kratzfesten Beschichtung, mit einem Copolyester oder mit einem Haftvermittler versehen sein.

Bewitterungstests haben ergeben, daß die erfindungsgemäß UV-stabilisierten Folien selbst bei Bewitterungstests nach hochgerechnet 5 bis 7 Jahren Außenanwendung im allgemeinen keine Vergilbung, keine Versprödung, kein Glanzverlust der Oberfläche, keine Rißbildung an der Oberfläche und keine Verschlechterung der mechanischen Eigenschaften aufweisen.

Bei der Herstellung der Folie wurde festgestellt, daß sich die UV-stabilisierte Folie hervorragend in Längsund in Querrichtung ohne Abrisse orientieren läßt. Des weiteren wurden keinerlei Ausgasungen des UV-Stabilisators und/oder des optischen Aufhellers und/oder des blauen Farbstoffs im Produktionsprozeß gefunden, was erfindungswesentlich ist, da die meisten UV-Stabilisatoren bei Extrusionstemperaturen über 260°C störende, unangenehme Ausgasungen zeigen und damit untauglich sind.

Darüber hinaus ergaben Messungen, daß die erfindungsgemäße Folie schwer brennbar und schwer entflammbar ist, so daß sie sich beispielsweise für Innenanwendungen und im Messebau eignet. Überraschenderweise erfüllen schon erfindungsgemäße Folien im Dickenbereich von 350 bis 500 µm die Baustoffklasse B2. 350 bis 500 µm dicke Folien erfüllen überraschenderweise auch die Brandstoffklasse S4 nach DIN 5510, Rauchentwicklung SR2, Tropfbarkeit ST1.

Des weiteren ist die erfindungsgemäße Folie ohne Umweltbelastung und ohne Verlust der mechanischen Eigenschaften problemlos rezyklierbar, wodurch sie sich beispielsweise für die Verwendung als kurzlebige Werbeschilder oder anderer Werbeartikel eignet.

Die Herstellung der erfindungsgemäßen, transparenten, UV-stabilisierten Folie kann beispielsweise nach einem Extrusionsverfahren in einer Extrusionsstraße erfolgen.

Erfindungsgemäß kann das Lichtschutzmittel und der optische Aufheller und ggf. der blaue Farbstoff bereits beim Thermoplast-Rohstoffhersteller zudosiert werden oder bei der Folienherstellung in den Extruder dosiert werden.

Besonders bevorzugt ist die Zugabe des Lichtschutzmittels und des optischen Aufhellers und ggf. des blauen Farbstoffes über die Masterbatchtechnologie. Die obengenannten lichtschutzaktiven Komponenten werden in einem festen Trägermaterial voll dispergiert. Als Trägermaterialien kommen der Thermoplast selbst, wie z. B. das Polyethylenterephthalat oder auch andere Polymere, die mit dem Thermoplasten ausreichend verträglich sind, in Frage.

Wichtig bei der Masterbatch-Technologie ist, daß die Korngröße und das Schüttgewicht des Masterbatches ähnlich der Korngröße und dem Schüttgewicht des Thermoplasten ist, so daß eine homogene Verteilung und damit eine homogene UV-Stabilisierung erfolgen kann.

Die Polyesterfolien können nach bekannten Verfahren aus einem Polyesterrohstoff mit ggf. weiteren Rohstoffen und den obengenannten lichtschutzaktiven Komponenten und/oder weiteren üblichen Additiven in üblicher Menge von 0,1 bis maximal 10 Gew.-% sowohl als Monofolien als auch als mehrschichtige, ggf. koextrudierte Folien mit gleichen oder unterschiedlich ausgebildeten Oberflächen hergestellt werden, wobei eine Oberfläche beispielsweise pigmentiert ist und die andere Oberfläche kein Pigment enthält. Ebenso können eine oder beide Oberflächen der Folie nach bekannten Verfahren mit einer üblichen funktionalen Beschichtung versehen werden.

Bei dem bevorzugten Extrusionsverfahren zur Herstellung der Polyesterfolie wird das aufgeschmolzene Polyestermaterial durch eine Schlitzdüse extrudiert und als weitgehend amorphe Vorfolie auf einer Kühlwalze abgeschreckt. Diese Folie wird anschließend erneut erhitzt und in Längs- und Querrichtung bzw. in Quer- und in Längsrichtung bzw. in Längs-, in Quer- und nochmals in Längsrichtung und/oder Querrichtung gestreckt. Die Strecktemperaturen liegen im allgemeinen bei $T_g$ + 10 °C bis $T_g$ + 60 °C ($T_g$ = Glastemperatur), das Streckverhältnis der Längsstreckung liegt üblicherweise bei 2 bis 6, insbesondere bei 3 bis 4,5, das der Querstreckung bei 2 bis 5, insbesondere bei 3 bis 4,5, und das der ggf. durchgeführten zweiten Längsstreckung bei 1,1 bis 3. Die erste Längsstreckung kann ggf. gleichzeitig mit der Querstreckung (Simultanstreckung) durchgeführt werden. Anschließend folgt die Thermofixierung der Folie bei Ofentemperaturen von 200 bis 260 °C insbesondere bei 220 bis 250 °C. Anschließend wird die Folie abgekühlt und aufgewickelt.

Durch die überraschende Kombination ausgezeichneter Eigenschaften eignet sich die erfindungsgemäße, transparente Folie hervorragend für eine Vielzahl verschiedener Anwendungen, beispielsweise für Innenraumverkleidungen, für Messebau und Messeartikel, als Displays, für Schilder, für Schutzverglasungen von Maschinen und Fahrzeugen, im Beleuchtungssektor, im Laden- und Regalbau, als Werbeartikel, Kaschiermedium.

Aufgrund der guten UV-Stabilität eignet sich die erfindungsgemäße, transparente Folie ebenfalls für Außenanwendungen, wie z.B. für Gewächshäuser, Überdachungen, Außenverkleidungen, Abdeckungen, Anwendungen im Bausektor und Lichtwerbeprofile.

Die Erfindung wird im folgenden anhand von Ausführungsbeispielen näher erläutert.

Die Messung der einzelnen Eigenschaften erfolgt dabei gemäß der folgenden Normen bzw. Verfahren.

**Meßmethoden**

**Oberflächenglanz:**

Der Oberfiächenglanz wird bei einem Meßwinkel von 20 ° nach DIN 67530 gemessen.

**Lichttransmission:**

Unter der Lichttransmission ist das Verhältnis des insgesamt durchgelassenen Lichtes zur einfallenden Lichtmenge zu verstehen.

Die Lichttransmission wird mit dem Meßgerät "Hazegard plus" nach ASTM D 1003 gemessen.

**Trübung**

Trübung ist der prozentuale Anteil des durchgelassenen Lichtes, der vom eingestrahlten Lichtbündel im Mittel um mehr als 2,5 ° abweicht. Die Bildschärfe wird unter einem Winkel kleiner als 2,5 ° ermittelt.

Die Trübung wird mit dem Meßgerät "Hazegard plus" nach ASTM D 1003 gemessen.

**Oberflächendefekte:**

Die Oberflächendefekte werden visuell bestimmt.

**Mechanische Eigenschaften:**

Der E-Modul, die Reißfestigkeit und die Reißdehnung werden in Längs- und Querrichtung nach ISO 527-1-2 gemessen.

**SV (DCE), IV (DCE):**

Die Standardviskosität SV (DCE) wird angelehnt an DIN 53726 in Dichloressigsäure gemessen.

Die intrinsische Viskosität (IV) berechnet sich wie folgt aus der Standardviskosität (SV)

$$IV \, (DCE) = 6{,}67 \cdot 10^{-4} \, SV \, (DCE) + 0{,}118$$

**Bewitterung (beidseitig), UV-Stabilität:**

Die UV-Stabilität wird nach der Testspezifikation ISO 4892 wie folgt geprüft

| Testgerät | Atlas Ci 65 Weather Ometer |
|---|---|
| Testbedingungen | ISO 4892, d. h. künstliche Bewitterung |
| Bestrahlungszeit | 1000 Stunden (pro Seite) |
| Bestrahlung | 0,5 W/m$^2$, 340 nm |
| Temperatur | 63 °C |
| Relative Luftfeuchte | 50 % |
| Xenonlampe | innerer und äußerer Filter aus Borosilikat |
| Bestrahlungszyklen | 102 Minuten UV-Licht, dann 18 Minuten UV-Licht mit Wasserbesprühung der Proben dann wieder 102 Minuten UV-Licht usw. |

**Farbveränderung:**

Die Farbveränderung der Proben nach der künstlichen Bewitterung wird mit einem Spektralphotometer nach DIN 5033 gemessen.
Es gilt:

| $\Delta L$ | Differenz in der Helligkeit |
|---|---|
| $+\Delta L$ | Die Probe ist heller als der Standard |
| $-\Delta L$ | Die Probe ist dunkler als der Standard |
| $\Delta A$ | Differenz im Rot-Grün-Bereich |
| $+\Delta A$ | Die Probe ist roter als der Standard |
| $-\Delta A$: | Die Probe ist grüner als der Standard |
| $\Delta B$ | Differenz im Blau-Gelb-Bereich |
| $+\Delta B$ | Die Probe ist gelber als der Standard |
| $-\Delta B$ | Die Probe ist blauer als der Standard |
| $\Delta E$ | Gesamtfarbänderung |
| | $\Delta E = \Delta L^2 + \Delta A^2 + \Delta B^2$ |

Je größer die numerische Abweichung vom Standard ist, desto größer ist der Farbunterschied.
Numerische Werte von $\leq$ 0,3 sind vernachlässigbar und bedeuten, daß keine signifikante Farbänderung vorliegt.

**Gelbwert:**

Der Gelbwert G ist die Abweichung von der Farblosigkeit in Richtung "Gelb" und wird gemäß DIN 6167 gemessen. Gelbwert G-Werte von $\leq$ 5 sind visuell nicht sichtbar.
Bei nachstehenden Beispielen und Vergleichsbeispielen handelt es sich jeweils um einschichtige, transparente Folien unterschiedlicher Dicke, die auf der beschriebenen Extrusionsstraße hergestellt werden.
Alle Folien wurden nach der Testspezifikation ISO 4892 beidseitig je 1000 Stunden pro Seite mit dem Atlas Ci 65 Weather Ometer der Fa. Atlas bewittert und anschließend bezüglich der mechanischen Eigenschaften, der Verfärbung, der Oberflächendefekte, der Trübung und des Glanzes geprüft.

**Beispiel 1:**

Es wird eine 50 μm dicke, transparente Folie hergestellt, die als Hauptbestandteil Polyethylenterephthalat 0,3 Gew.-% Sylobloc und 1,0 Gew.-% des UV-Stabilisators 2-(4,6-Diphenyl-1,3,5-triazin-2-yl)-5-(hexyl)oxyphenol (®Tinuvin 1577 der Firma Ciba-Geigy, Basel, Schweiz) und 0,02 Gew.-% Triazin-phenylcumarin (Tinopal®, Ciba-Geigy, Basel, Schweiz) und 0,01 Gew.-% Anthrachinonfarbstoff (Sudanblau 2, BASF, Ludwigshafen, Bundesrepublik Deutschland) enthält.

Tinuvin 1577 hat einen Schmelzpunkt von 149°C und ist bis ca. 330°C thermisch stabil.

Zwecks homogener Verteilung werden 0,3 Gew.-% Sylobloc und 1,0 Gew.-% des UV-Stabilisators und 0,02 Gew.-% Tinopal und 0,01 Gew.-% Sudanblau 2 in das Polyethylenterephthalat eingearbeitet.

Das Polyethylenterephthalat, aus dem die transparente Folie hergestellt wird, hat eine Standardviskosität SV (DCE) von 810, was einer intrinsischen Viskosität IV (DCE) von 0,658 dl/g entspricht.

Die hergestellte transparente PET-Folie hat folgendes Eigenschaftsprofil:

| - | Dicke | 50 μm |
|---|---|---|
| - | Oberflächenglanz 1. Seite | 155 |
| | (Meßwinkel 20 °) 2. Seite | 152 |
| - | Lichttransmission | 91 % |
| - | Trübung | 4,0 % |
| - | Oberflächendefekte pro m$^2$ | keine |
| | E-Modul längs | 4300 N/mm$^2$ |
| - | E-Modul quer | 5800 N/mm$^2$ |
| - | Reißfestigkeit längs | 190 N/mm$^2$ |
| - | Reißfestigkeit quer | 280 N/mm$^2$ |
| - | Reißdehnung längs | 170 % |
| - | Reißdehnung quer | 85 % |
| - | Gelbzahl (YID) | 3,1 |

Nach je 1000 Stunden Bewitterung pro Seite mit Atlas Ci 65 Weather Ometer zeigt die PET-Folie folgende Eigenschaften:

| - | Dicke | 50 μm |
|---|---|---|
| - | Oberflächenglanz 1. Seite | 145 |
| | (Meßwinkel 20°) 2. Seite | 141 |
| - | Lichttransmission | 90,1 % |
| - | Trübung | 4,5 % |
| - | Gesamtverfärbung ΔE | 0,22 |
| - | Dunkelverfärbung ΔL | -0,18 |
| - | Rot-Grün-Verfärbung ΔA | -0,08 |
| - | Blau-Gelb-Verfärbung ΔB | 0,10 |
| - | Oberflächendefekte (Risse, Versprödungen) | keine |
| - | Gelbzahl (YID) | 3,6 |

(fortgesetzt)

| - | E-Modul längs | 4150 N/mm$^2$ |
|---|---|---|
| - | E-Modul quer | 5600 N/mm$^2$ |
| - | Reißfestigkeit längs | 170 N/mm$^2$ |
| - | Reißfestigkeit quer | 250 N/mm$^2$ |
| - | Reißdehnung längs | 150 % |
| - | Reißdehnung quer | 70 % |

**Beispiel 2:**

Analog Beispiel 1 wird eine transparente Folie hergestellt, wobei der UV-Stabilisator 2-(4,6-Diphenyl-1,3,5-triazin-2-yl)-5-(hexyl)-oxyphenol (®Tinuvin 1577) sowie Tinopal und Sudanblau 2 in Form eines Masterbatches zudosiert wird. Das Masterbatch setzt sich aus 5 Gew.-% ®Tinuvin 1577, 0,2 Gew.-% Tinopal und 0,1 Gew.-% Sudanblau 2 als Wirkstoffkomponente und 94,7 Gew.-% des Polyethylenterephthalats aus Beispiel 1 zusammen.

Vor der Extrusion werden 90 Gew.-% des Polyethylenterephthalats aus Beispiel 1 mit 10 Gew.-% des Masterbatches 5 Stunden bei 170°C getrocknet. Die Extrusion und Folienherstellung erfolgt analog zu Beispiel 1.

Die hergestellte transparente PET-Folie hat folgendes Eigenschaftsprofil:

| - | Dicke | 50 μm |
|---|---|---|
| - | Oberflächenglanz 1. Seite | 160 |
| | (Meßwinkel 20°) 2. Seite | 157 |
| - | Lichttransmission | 91,3 % |
| - | Trübung | 3,8% |
| - | Oberflächendefekte (Stippen, Orangenhaut, Blasen usw.) | keine |
| - | E-Modul längs | 4200 N/mm$^2$ |
| - | E-Modul quer | 5650 N/mm$^2$ |
| - | Reißfestigkeit längs | 160 N/mm$^2$ |
| - | Reißfestigkeit quer | 250 N/mm$^2$ |
| - | Reißdehnung längs | 160 % |
| - | Reißdehnung quer | 75 % |
| - | Gelbzahl (YID) | 3,4 |

Nach je 1000 Stunden Bewitterung pro Seite mit Atlas Ci 65 Weather Ometer zeigt die PET-Folie folgende Eigenschaften:

| - | Dicke | 50 μm |
|---|---|---|
| - | Oberflächenglanz 1. Seite | 148 |
| | (Meßwinkel 20°) 2. Seite | 146 |
| - | Lichttransmission | 89,9 % |
| - | Trübung | 4,1 % |
| - | Gesamtverfärbung ΔE | 0,24 |
| - | Dunkelverfärbung ΔL | -0,19 |

(fortgesetzt)

| - | Rot-Grün-Verfärbung ∆A | -0,08 |
|---|---|---|
| - | Blau-Gelb-Verfärbung ∆B | 0,12 |
| - | Oberflächendefekte (Risse, Versprödung) | keine |
| - | Gelbzahl (YID) | 4,3 |
| - | E-Modul längs | 4050 N/mm$^2$ |
| - | E-Modul quer | 5500 N/mm$^2$ |
| - | Reißfestigkeit längs | 151 N/mm$^2$ |
| - | Reißfestigkeit quer | 238 N/mm$^2$ |
| - | Reißdehnung längs | 152 % |
| - | Reißdehnung quer | 68 % |

**Beispiel 3:**

Analog Beispiel 2 wird eine transparente 350 µm dicke Folie hergestellt. Die hergestellte PET-Folie hat folgendes Eigenschaftsprofil:

| - | Dicke | 350 µm |
|---|---|---|
| - | Oberflächenglanz 1. Seite | 149 |
| | (Meßwinkel 20 °) 2. Seite | 144 |
| - | Lichttransmission | 84,1 % |
| - | Trübung | 13,1 % |
| - | Oberflächendefekte pro m$^2$ (Stippen, Orangenhaut, Blasen usw.) | keine |
| - | Gelbzahl | 4,5 |
| - | E-Modul längs | 3600 N/mm$^2$ |
| - | E-Modul quer | 4200 N/mm$^2$ |
| - | Reißfestigkeit längs | 180 N/mm$^2$ |
| - | Reißfestigkeit quer | 200 N/mm$^2$ |
| - | Reißdehnung längs | 220 % |
| - | Reißdehnung quer | 190 % |

Nach je 1000 Stunden Bewitterung pro Seite mit Atlas Ci 65 Weather Ometer zeigt die PET-Folie folgende Eigenschaften:

| - | Dicke | 350 µm |
|---|---|---|
| - | Oberflächenglanz 1. Seite | 136 |
| | (Meßwinkel 20°) 2. Seite | 131 |
| - | Lichttransmission | 84,3 % |
| - | Trübung | 14,0 % |

(fortgesetzt)

| - | Gesamtverfärbung ΔE | 0,47 |
|---|---|---|
| - | Dunkelverfärbung ΔL | -0,18 |
| - | Rot-Grün-Verfärbung ΔA | -0,09 |
| - | Blau-Gelb-Verfärbung ΔB | +0,42 |
| - | Oberflächendefekte (Risse, Versprödung) | keine |
| - | Gelbzahl (YID) | 5,4 |
| - | E-Modul längs | 3500 N/mm$^2$ |
| - | E-Modul quer | 4050 N/mm$^2$ |
| - | Reißfestigkeit längs | 165 N/mm$^2$ |
| - | Reißfestigkeit quer | 185 N/mm$^2$ |
| - | Reißdehnung längs | 200 % |
| - | Reißdehnung quer | 170 % |

**Beispiel 4**

Nach der Koextrusionstechnologie wird eine 50 μm dicke mehrschichtige PET-Folie mit der Schichtreihenfolge A-B-A hergestellt, wobei B die Kernschicht und A die Deckschichten repräsentieren. Die Kernschicht 8 ist 48 μm dick und die beiden Deckschichten, welche die Kernschicht überziehen, sind jeweils 1 μm dick.

Das für die Kernschicht B eingesetzte Polyethylentherephthalat ist identisch mit dem aus Beispiel 2, enthält aber kein Sylobloc. Das Polyethylentherephthalat der Deckschichten A ist identisch mit dem Polyethylentherephthalat aus Beispiel 2, d. h. der Deckschichtrohstoff ist mit 0,3 Gew.-% Sylobloc ausgerüstet.

Analog Beispiel 2 werden 5 Gew.-% ®Tinuvin 1577, 0,2 Gew-% ®Tinopal und 0,1 Gew.-% Sudanblau 2 Masterbatch eingesetzt, wobei aber lediglich den 1 μm dicken Deckschichten 20 Gew.-% des Masterbatches über die Masterbatchtechnologie zudosiert werden.

Die hergestellt transparente, mehrschichtige, in den Deckschichten UV-stabilisierte PET-Folie hat folgendes Eigenschaftsprofil:

| - | Schichtaufbau | A-B-A |
|---|---|---|
| - | Gesamtdicke | 50 μm |
| - | Oberflächenglanz 1. Seite | 164 |
| - | (Meßwinkel 20°) 2. Seite | 159 |
| - | Lichttransmission | 94,2 % |
| - | Trübung | 2,1 % |
| - | Oberflächendefekte (Stippen, Orangenhaut, Blasen, usw.) | keine |
| - | E-Modul längs | 4300 N/mm$^2$ |
| - | E-Modul quer | 5720 N/mm$^2$ |
| - | Reißfestigkeit längs | 180 N/mm$^2$ |
| - | Reißfestigkeit quer | 265 N/mm$^2$ |
| - | Reißdehnung längs | 165 % |
| - | Reißdehnung quer | 85 % |
| - | Gelbzahl /YID) | 2,9 |

Nach 1000 Stunden Bewitterung pro Seite mit Atlas CI 65 Weather Ometer zeigt die mehrschichtige Folie folgende Eigenschaften:

| - | Schichtaufbau | A-B-A |
|---|---|---|
| - | Gesamtdicke | 50 µm |
| - | Oberflächenglanz 1. Seite | 152 |
| - | (Meßwinkel 20°) 2. Seite | 150 |
| - | Lichttransmission | 92,3 % |
| - | Trübung | 3,0 % |
| - | Gesamtverfärbung $\Delta E$ | 0,25 |
| - | Dunkelverfärbung $\Delta L$ | -0,20 |
| - | Rot-Grün-Verfärbung $\Delta A$ | -0,09 |
| - | Blau-Gelb-Verfärbung $\Delta B$ | 0,13 |
| - | Oberflächendefekte (Stippen, Orangenhaut, Blasen, usw.) | keine |
| - | E-Modul längs | 4175 N/mm$^2$ |
| - | E-Modul quer | 5650 N/mm$^2$ |
| - | Reißfestigkeit längs | 165 N/mm$^2$ |
| - | Reißfestigkeit quer | 250 N/mm$^2$ |
| - | Reißdehnung längs | 155 % |
| - | Reißdehnung quer | 75 % |
| - | Gelbzahl /YID) | 3,0 |

Die erfindungsgemäßen Beispiele zeigen, daß die optischen und mechanischen Eigenschaften der Folien die gestellten hohen Anforderungen erfüllen, wobei gleichzeitig die UV-Stabilität wesentlich erhöht ist.

**Vergleichsbeispiel 1**

Analog Beispiel 1 wird eine 50 µm dicke PET-Monofolie hergestellt. Im Gegensatz zu Beispiel 1 enthält die Folie keine UV-Stabilisator, keinen optischen Aufheller und keinen blauen Farbstoff.

Die hergestellte, unstabilisierte, transparente Folie hat folgendes Eigenschaftsprofil:

| - | Dicke | 50 µm |
|---|---|---|
| - | Oberflächenglanz 1. Seite | 160 |
| - | (Meßwinkel 20°) 2. Seite | 155 |
| - | Lichttransmission | 91,8 % |
| - | Trübung | 3,6 % |
| - | Oberflächendefekte (Stippen, Orangenhaut, Blasen, usw.) | keine |
| - | E-Modul längs | 4350 N/mm$^2$ |
| - | E-Modul quer | 5800 N/mm$^2$ |
| - | Reißfestigkeit längs | 185 N/mm$^2$ |
| - | Reißfestigkeit quer | 270 N/mm$^2$ |

(fortgesetzt)

| - | Reißdehnung längs | 160 % |
|---|---|---|
| - | Reißdehnung quer | 80 % |
| - | Gelbzahl /YID) | 2,7 |

Nach 1000 Stunden Bewitterung pro Seite mit Atlas CI 65 Weather Ometer weist die Folie an den Oberflächen Risse und Versprödungserscheinungen auf. Ein präzises Eigenschaftsprofil - insbesondere die mechanischen Eigenschaften - kann daher nicht mehr gemessen werden. Außerdem zeigt die Folie eine visuell sichtbare Gelbfärbung.

**Vergleichsbeispiel 2**

Es wurde eine Folie gemäß Beispiel 1 der **WO 98/06575** hergestellt. Die 30 µm dicke Folie, welche eine 5 µm dicke Siegelschicht enthält und 1 Gew.-% $^{®}$Tinuvin 1577 FF in der Basisschicht enthält, hatte folgende Eigenschaften

| - | Glanz 1. Seite | 43 % |
|---|---|---|
| - | Meßwinkel | 60 ° |
| - | Gelbwert (YID) | 15 |
| - | Trübung | 67 % |

Die hergestellte Folie hat einen inakzeptabel hohen Gelbwert, eine hohe Trübung und einen niedrigen Glanz.

Nach 1000 Stunden Bewitterung mit dem Atlas CI 65 Weather Ometer pro Seite zeigt die Folie in den Oberflächen Risse und Versprödungserscheinungen. Ein präzises Eigenschaftsprofil ist nicht mehr meßbar.

**Patentansprüche**

1.  Transparente biaxial orientierte Folie, mit einer Dicke im Bereich von 1 bis 500 µm, die als Hauptbestandteil einen kristallisierbaren Thermoplasten enthält, dadurch gekennzeichnet, daß sie mindestens einen UV-Stabilisator und mindestens einen optischen Aufheller enthält.

2.  Folie gemäß Anspruch 1, dadurch gekennzeichnet, daß die Konzentration des UV-Stabilisators im Bereich von 0,01 bis 5 Gew.-%, bezogen auf das Gewicht des kristallisierbaren Thermoplasten, liegt.

3.  Folie gemäß Anspruch 1 oder 2, dadurch gekennzeichnet, daß der UV-Stabilisator ausgewählt ist aus 2-Hydroxybenzotriazolen und/oder Triazinen.

4.  Folie gemäß Anspruch 3, dadurch gekennzeichnet, daß der UV-Stabilisator 2-(4,6-Diphenyl-1,3,5-triazin-2-yl)-5-(hexyl)oxy-phenol und/oder 2,2'-Methylen-bis(6-(2H-benzotriazol-2-yl)-4-(1,1,3,3-tetramethylbutyl)-phenol ist.

5.  Folie gemäß einem der Ansprüche 1 bis 4, dadurch gekennzeichnet, daß der optische Aufheller ausgewählt ist aus Bisbenzoxazolen, Phenylcumarinen und Bis-steryl-biphenylen.

6.  Folie gemäß einem der Ansprüche 1 bis 5, dadurch gekennzeichnet, daß der Oberflächenglanz, gemessen nach DIN 67530 (Meßwinkel 20°), größer als 120 ist.

7.  Folie gemäß einem der Ansprüche 1 bis 6, dadurch gekennzeichnet, daß die Lichttransmission, gemessen nach ASTM D 1003, mehr als 84 % beträgt.

8.  Folie gemäß einem der Ansprüche 1 bis 7, dadurch gekennzeichnet, daß die Trübung, gemessen nach ASTM D 1003, weniger als 20 beträgt.

EP 1 038 905 A2

9. Folie gemäß einem der Ansprüche 1 bis 8, dadurch gekennzeichnet, daß der kristallisierbare Thermoplast eine Kristallinität aufweist, die im Bereich von 5 bis 65 % liegt.

10. Folie gemäß einem der Ansprüche 1 bis 9, dadurch gekennzeichnet, daß der kristallisierbare Thermoplast ausgewählt ist aus Polyethylenterephthalat, Polybutylenterephthalat und Polyethylennaphthalat und Mischungen aus einem oder mehreren dieser Thermoplasten.

11. Folie gemäß Anspruch 10, dadurch gekennzeichnet, daß als kristallisierbarer Thermoplast Polyethylenterephthalat verwendet wird.

12. Folie gemäß Anspruch 11, dadurch gekennzeichnet, daß das Polyethylenterephthalat Polyethylenterephthalat-Rezyklat enthält.

13. Folie nach einem der Ansprüche 1 bis 12, dadurch gekennzeichnet, daß sie einen einschichtigen Aufbau aufweist.

14. Folie nach einem der Ansprüche 1 bis 12, dadurch gekennzeichnet, daß die Folie eine mehrschichtige Struktur mit mindestens einer Deckschicht und mindestens einer Kernschicht aufweist.

15. Folie nach Anspruch 14, dadurch gekennzeichnet, daß die mehrschichtige Struktur zwei Deckschichten und eine zwischen den Deckschichten liegende Kernschicht aufweist.

16. Folie nach Anspruch 14 oder 15, dadurch gekennzeichnet, daß der mindestens eine UV-Stabilisator in der/den Deckschichten enthalten ist.

17. Folie nach einem der Ansprüche 1 bis 16, dadurch gekennzeichnet, daß die Folie auf mindestens einer Oberfläche einen Haftvermittler aufweist.

18. Folie nach einem der Ansprüche 1 bis 17, dadurch gekennzeichnet, daß die Folie auf mindestens einer Oberfläche einen Copolyester aufweist.

19. Folie nach einem der Ansprüche 1 bis 18, dadurch gekennzeichnet, daß die Folie auf mindestens einer Oberfläche eine kratzfeste Beschichtung aufweist.

20. Folie gemäß einem der Ansprüche 11 oder 12, dadurch gekennzeichnet, daß das Polyethylenterephthalat einen Kristallitschmelzpunkt, gemessen durch DSC mit einer Aufheizgeschwindigkeit von 10 °C/min., im Bereich von 220 ° bis 280 °C aufweist.

21. Folie gemäß einem der Ansprüche 11 oder 12, dadurch gekennzeichnet, daß das Polyethylenterephthalat eine Kristallisationstemperatur, gemessen durch DSC mit einer Aufheizgeschwindigkeit von 10 °C/min., im Bereich von 75 ° bis 280 °C aufweist.

22. Folie gemäß einem der Ansprüche 11 oder 12, dadurch gekennzeichnet, daß das eingesetzte Polyethylenterephthalat eine Standardviskosität SV (DCE), gemessen in Dichloressigsäure nach DIN 53728, aufweist, die im Bereich von 600 bis 1000 liegt.

23. Folie nach einem der Ansprüche 14 bis 16, dadurch gekennzeichnet, daß die Deckschichten Polyethylentherephthalat enthalten.

24. Folie nach einem der Ansprüche 14 bis 16, dadurch gekennzeichnet, daß die Deckschichten Polyethylennaphthalat enthalten.

25. Folie nach einem der Ansprüche 14 bis 16, dadurch gekennzeichnet, daß die Deckschichten Copolymere oder Compounds aus Polyethyelentherephthalat und Polyethlennaphthalat enthalten.

26. Verfahren zur Herstellung einer transparentenn Folie gemäß einem der Ansprüche 1 bis 25, dadurch gekennzeichnet, daß man einen kristallisierbaren Thermoplast in einem Extruder zusammen mit mindestens einem UV-Stabilisator und mindestens einem optischen Aufheller aufschmilzt, auf eine Kühlwalze extrudiert, biaxial orientiert, fixiert und aufrollt.

**14**

27. Verfahren nach Anspruch 26, dadurch gekennzeichnet, daß der kristallisierbare Thermoplast vor dem Aufschmelzen in dem Extruder getrocknet wird.

28. Verfahren gemäß einem der Ansprüche 26 und 27, dadurch gekennzeichnet, daß die Zugabe des UV-Stabilisators und/oder des optischen Aufhellers über die Masterbatchtechnologie durchgeführt wird.

Fig. 1a

2-(4,6-Diphenyl-1,3,5-triazin-2-yl)-5-(hexyl)oxyphenol

Fig. 1b

2,2'-Methylen-bis(6-(2H-benzotriazol-2-yl)-4-(1,1,3,3-tetramethylbutyl)-phenol